(19) **Europäisches Patentamt**
**European Patent Office**
**Office européen des brevets**

(11) **EP 4 757 310 A1**

(12) **EUROPEAN PATENT APPLICATION**

(43) Date of publication:
**10.06.2026 Bulletin 2026/24**

(21) Application number: **24315555.3**

(22) Date of filing: **09.12.2024**

(51) International Patent Classification (IPC):
**H04N 19/11** (2014.01)     **H04N 19/147** (2014.01)
**H04N 19/176** (2014.01)     **H04N 19/593** (2014.01)

(52) Cooperative Patent Classification (CPC):
**H04N 19/11; H04N 19/147; H04N 19/176;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing Beijing 100085 (CN)**

(72) Inventors:
• **Ghaznavi Youvalari, Ramin
Beijing, 100085 (CN)**

• **Abdoli, Mohsen
Beijing, 100085 (CN)**
• **Tissier, Alexandre
Beijing, 100085 (CN)**
• **Plowman, Frank
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PREDICTING A PICTURE USING AN IPM LIST GENERATED FROM BOTH MATRIX-BASED AND NON-MATRIX-BASED INTRA PREDICTION MODES**

(57)     A method of predicting one or more blocks of a picture includes selecting an intra prediction mode (IPM) from an IPM list, and using the selected IPM for predicting a block of the picture. The IPM list is generated using both one or more matrix-based IPMs and one or more non-matrix-based IPMs.

Selecting an intra prediction mode (IPM) from an IPM list and using the selected IPM for predicting a block of the picture, wherein the IPM list is generated using both one or more matrix-based IPMs and one or more non-matrix-based IPMs — S100

Fig. 7

**Description**

**Technical Field**

The present disclosure generally relates to the field of encoding/decoding pictures, images or videos, and embodiments of the present disclosure concern improvements regarding a prediction. More specific embodiments of the present disclosure relate to the use of an intra prediction mode (IPM) list for predicting one or more blocks of a picture, with the IPM list created or list generated from both matrix-based and non-matrix-based intra prediction modes, e.g., by generating/creating the IPM list using or based on the matrix-based and non-matrix-based intra prediction modes.

**Background**

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, a matrix-based intra prediction mode or a non-matrix-based intra prediction mode may be used. The matrix-based intra prediction mode may include a Matrix weighted Intra Prediction (MIP) method or a Matrix-based position-dependent prediction (MPDP) method, and the non-matrix-based intra prediction mode may include an angular Intra Prediction Mode (IPM) method or a non-angular Intra Prediction Mode (IPM) method.

Thus, there is a need to provide further improvements for processing/predicting a picture, an image or a video, e.g., when encoding and/or decoding of the picture, the image or the video.

**Summary**

The present disclosure provides a method of predicting one or more blocks of a picture, the method comprising: selecting an intra prediction mode (IPM) from an IPM list, and using the selected IPM for predicting a block of the picture, wherein the IPM list is generated using both one or more matrix-based IPMs and one or more non-matrix-based IPMs.

Optionally, the IPM list is generated such that the IPM list comprises one or more matrix-based IPMs and/or one or more non-matrix-based IPMs.

Optionally, the IPM list is generated by

- generating a candidate list comprising N non-matrix-based IPMs, with N being an integer $\geq 1$, and M matrix-based IPMs, with M being an integer $\geq 1$, and
- selecting from the candidate list the N best performing IPMs.

Optionally, the N best performing IPMs are selected using one or more for the following:

- a prediction performance of each IPM in the candidate list over one or more template samples for the block,
- an availability of IPMs modes in adjacent and/or non-adjacent neighboring blocks.

Optionally, a prediction performance of an IPM in the candidate list is determined by

- obtaining a prediction of one or more template samples from one or more neighborhood areas of the block using the IPM, and
- determining for the IPM a template prediction distortion on the one or more template samples by comparing the prediction to one or more reconstructed template samples from the one or more neighborhood areas of the block.

Optionally,

the one or more reconstructed template samples are from a template area above and/or left of the block, and wherein the template areas for determining the template prediction distortion for the matrix-based and non-matrix-based IPMs are the same, or

the one or more reconstructed template samples are from a template area above and/or left of the block, and wherein the template areas for determining the template prediction distortion for the matrix-based and non-matrix-based IPMs are different, and wherein the determined template prediction distortion are normalized, e.g., on a number of pixels in each template area.

Optionally, the candidate list is sorted using the predefined metric, and the N first IPMs of the sorted candidate list are allocated to the IPM list.

Optionally, the IPM list comprises:

- a primary most probable mode (PMPM) list which includes the first n1 of the N first IPMs of the sorted candidate list,
- a secondary most probable mode (SMPM) list which includes the next n2 of the N first IPMs of the sorted candidate list, and
- a non-most probable mode (non-MPM) list which includes the last n3 of the N first IPMs of the sorted candidate list, with n1 + n2+ n3 = N.

Optionally,

the remaining M IPMs of the candidate list are discarded, or
some or all of the remaining M IPMs of the candidate list are allocated to a second IPM list, e.g., to second non-MPM list, to be considered for predicting the block.

Optionally, a use of the IPM list for the prediction of the block is signaled for the block in a data stream.

Optionally, a use of the IPM list for the prediction of the block is not signaled for the block in a data stream and is determined implicitly using one or more of the following:

- the IPM list is used only for certain block sizes,
- the IPM list is used only in case one or more template samples are available for the block,
- the IPM list is used only when a certain texture analysis method, such as template-based intra mode derivation (TIMD), was utilized for a codec for predicting the block.

Optionally, a use of the IPM list for the prediction of the block is enabled or disabled at one of the following processing levels:

- a sequence-level at which the use of the IPM list is enabled or disabled for all coding units (CUs) in all coding tree units (CTUs) of all frames of a video content,
- a frame-level at which the use of the IPM list is enabled or disabled for all coding units (CUs) of all coding tree units (CTUs) in a frame or picture,
- a CTU-level at which the use of the IPM list is enabled or disabled at the beginning of each coding tree unit (CTU),
- a CU-level at which the use of the IPM list is enabled or disabled for each individual coding unit (CU).

Optionally,

the matrix-based intra prediction includes a Matrix weighted Intra Prediction (MIP) method or a Matrix-based position-dependent prediction (MPDP) method, and
the non-matrix-based intra prediction includes an angular Intra Prediction Mode (IPM) method or a non-angular Intra Prediction Mode (IPM) method.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:

a processing module, wherein the processing module is configured to select an intra prediction mode (IPM) from an IPM list, and use the selected IPM for predicting a block of the picture, wherein the IPM list is generated using both one or more matrix-based IPMs and one or more non-matrix-based IPMs.

The technical solutions provided according to embodiments of the present disclosure have the following beneficial effects.

In prior art approaches, a matrix-based prediction, like the matrix-based position-dependent prediction (MPDP) in ECM software, is used when certain criteria are met, and when used, it always replaces any conventional or non-matrix-based prediction. Always replacing a conventional or non-matrix-based prediction by a matrix-based prediction may result in a sub-optimal block prediction, e.g., in cases where the MPDP does not provide for an as accurate prediction as the conventional prediction mode or method.

Embodiments of the present disclosure provide various approaches for improving a prediction performance by adaptively utilizing a matrix-based prediction, like MPDP, and a conventional or non-matrix-based prediction intra prediction for a coding block. Embodiments address the drawbacks in conventional approaches by providing an approach, which, for predicting one or more blocks of a picture, selects an intra prediction mode (IPM) from an IPM list and uses the selected IPM for predicting a block of the picture. Other than in conventional approaches, the IPM list is generated using both one or more matrix-based IPMs and one or more non-matrix-based IPMs.

The present disclosure is advantageous as the prediction performance is improved by appropriately making use of a matrix-based prediction and/or a non-matrix-based prediction intra prediction.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | is a block diagram of a conventional video encoder, |
| Fig. 2 | is a block diagram of a conventional video decoder, |
| Fig. 3 | illustrates template-based intra mode derivation (TIMD) templates for a cost calculation or determination, |
| Fig. 4 | illustrates a matrix weighted intra prediction (MIP) process, |
| Fig. 5 | illustrates a L shaped neighborhood for a given predicted block, |
| Fig. 6 | illustrates for a currently processed block of a picture neighboring blocks used in a derivation of a general MPM list, |
| Fig. 7 | illustrates a flow diagram of a method of processing one or more blocks of a picture in accordance with embodiments of the present disclosure, |
| Fig. 8 | illustrates a flow diagram of a process for a mode decision in accordance with embodiments of the present disclosure, |
| Fig. 9 | illustrates a process in accordance with embodiments of the present disclosure for generating an IPM list for a currently processed or predicted block of a picture, |
| Fig. 10 | illustrates the dividing of the final or third list of N candidates into the PMPM, SMPM and non-MPM lists. |
| Fig. 11(A)-Fig. 11(B) | illustrate examples of a template prediction using a MPDP method, |
| Fig. 12 | illustrates an example of a template prediction using a conventional prediction method, such as TIMD, |
| Fig. 13 | illustrates a parsing mechanism when a secondary non-MPM is used in accordance with embodiments of the present disclosure, |
| Fig. 14 | illustrates a flow diagram of a method for decoding an encoded data stream in accordance with embodiments of the present disclosure, |
| Fig. 15 | illustrates a flow diagram of a method for encoding a picture into an encoded data stream in accordance with embodiments of the present disclosure, |
| Fig. 16 | illustrates a block diagram of an apparatus of predicting one or more blocks of a picture in accordance with embodiments of the present disclosure, |
| Fig. 17 | illustrates a block diagram of a decoder for decoding an encoded data stream in accordance with embodiments of the present disclosure, |
| Fig. 18 | illustrates a block diagram of an encoder for encoding a picture into an encoded data stream in accordance with embodiments of the present disclosure, |
| Fig. 19 | illustrates a data stream in accordance with embodiments of the present disclosure, and |
| Fig. 20 | illustrates a block diagram illustrating an electronic device according to embodiments of the present disclosure. |

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if', "when", "in case", "responsive to" may be used interchangeably.

*Standard Video Coder*

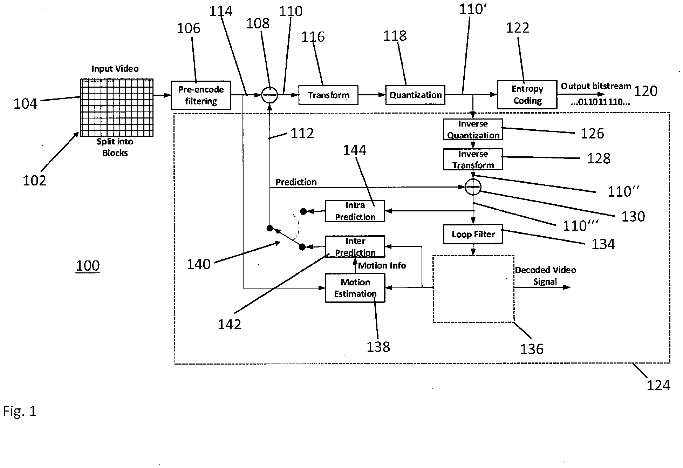

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110"' that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110"'. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

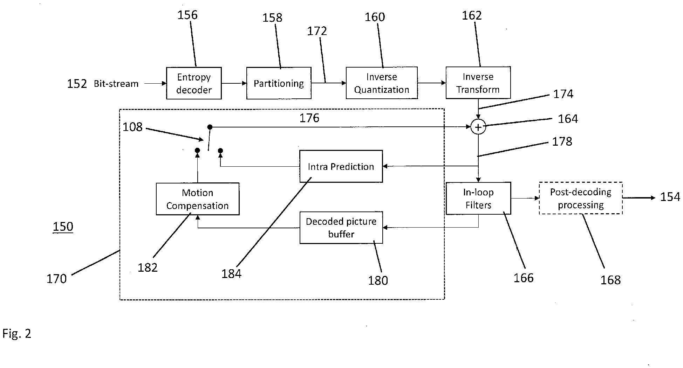

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Description of relevant tools in Enhanced Compression Model (ECM)

A brief description of relevant ECM tools is provided here. More information may be obtained from the JVET-AG2025 and JVET-T2002 documents.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = Floor(\,Log2(\,Gx\,)\,)$$

$$normDiff = (\,(\,Gx << 4\,) >> x\,)\,\&\,15$$

$$x += (\,3 + (\,normDiff\,!=\,0\,)\,?\,1:0\,)$$

$$Orient = (Gy*(\,DivSigTable[\,normDiff\,]\,|\,8\,) + (\,1 << (\,x\text{-}1\,)\,)) >> x$$

where

$$DivSigTable[16] = \{ 0, 7, 6, 5, 5, 4, 4, 3, 3, 2, 2, 1, 1, 1, 1, 0 \}.$$

For a block of size W × H, the weight for each of the five derived modes is modified if one of the above or left histogram magnitudes is twice as large as the other one. In this case, the weights are location dependent and computed as follows:

If the above histogram is twice the left, then:

$$w_i(x, y) = wDimd_i + \Delta_i - 2\Delta_i \frac{y}{(H-1)}.$$

If the left histogram is twice the above, then:

$$w_i(x, y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise only model is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the CCLM.

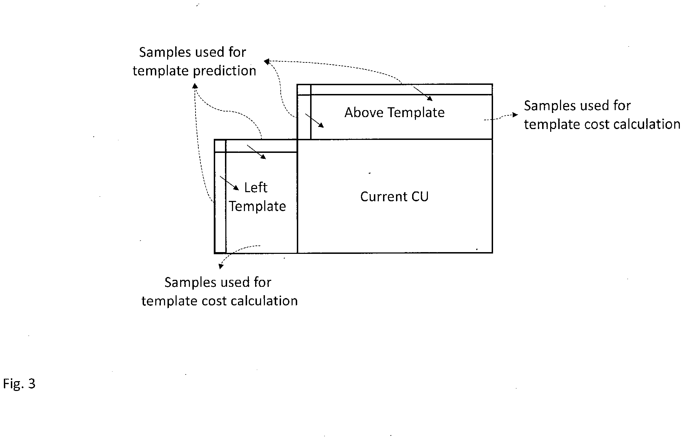

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 3 illustrating the TIMD templates for the cost determination or calculation.

*Angular Intra Prediction Mode (IPM) in VVC and ECM*

There exists a set of 67 Intra Prediction Modes (IPMs) in both VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

*Matrix weighted Intra Prediction (MIP)*

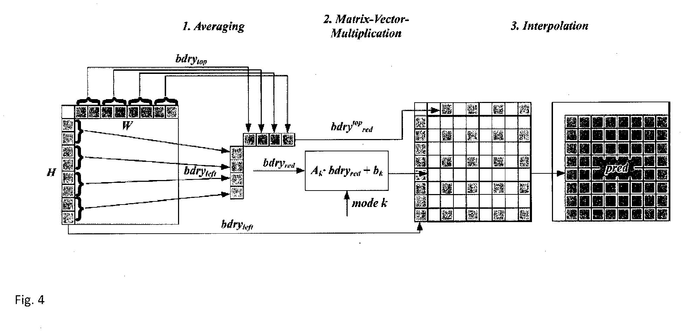

The matrix weighted intra prediction (MIP) method is an intra prediction technique in VVC. For predicting the samples of a rectangular block of width W and height H, the matrix weighted intra prediction (MIP) takes one line of H reconstructed neighboring boundary samples left of the block and one line of W reconstructed neighbouring boundary samples above the block as input. If the reconstructed samples are unavailable, they are generated as it is done in conventional intra prediction. Fig. 4 illustrates a matrix weighted intra prediction (MIP) process which generates the prediction signal based on the following three steps:

1. Averaging.
2. Matrix-Vector-Multiplication.
3. Linear Interpolation.

Averaging neighboring samples

Among the boundary samples, four samples or eight samples are selected by averaging based on block size and shape. The input boundaries $bdry^{top}$ and $bdry^{left}$ are reduced to smaller boundaries $bdry_{red}^{top}$ and $bdry_{red}^{left}$ by averaging neighboring boundary samples according to a predefined rule dependent on the block size. Then, the two reduced boundaries $bdry_{red}^{top}$ and $bdry_{red}^{left}$ are concatenated to a reduced boundary vector $bdry_{red}$ which is thus of size four for blocks of shape $4 \times 4$ and of size eight for blocks of all other shapes. If *mode* refers to the MIP-mode, this concatenation is defined as follows:

$$bdry_{red} = \begin{cases} \left[bdry_{red}^{top}, bdry_{red}^{left}\right] & \text{for } W = H = 4 \text{ and } mode < 18 \\ \left[bdry_{red}^{left}, bdry_{red}^{top}\right] & \text{for } W = H = 4 \text{ and } mode \geq 18 \\ \left[bdry_{red}^{top}, bdry_{red}^{left}\right] & \text{for } \max(W, H) = 8 \text{ and } mode < 10 \\ \left[bdry_{red}^{left}, bdry_{red}^{top}\right] & \text{for } \max(W, H) = 8 \text{ and } mode \geq 10 \\ \left[bdry_{red}^{top}, bdry_{red}^{left}\right] & \text{for } \max(W, H) > 8 \text{ and } mode < 6 \\ \left[bdry_{red}^{left}, bdry_{red}^{top}\right] & \text{for } \max(W, H) > 8 \text{ and } mode \geq 6. \end{cases}$$

Matrix Multiplication

A matrix vector multiplication, followed by addition of an offset, is carried out with the averaged samples as an input. The result is a reduced prediction signal on a subsampled set of samples in the original block. Out of the reduced input vector $bdry_{red}$ a reduced prediction signal $pred_{red}$, which is a signal on the down-sampled block of width $W_{red}$ and height $H_{red}$ is generated. Here, $W_{red}$ and $H_{red}$ are defined as:

$$W_{red} = \begin{cases} 4 & \text{for } \max(W,H) \leq 8 \\ \min(W,8) & \text{for } \max(W,H) > 8 \end{cases}$$

$$H_{red} = \begin{cases} 4 & \text{for } \max(W,H) \leq 8 \\ \min(H,8) & \text{for } \max(W,H) > 8 \end{cases}$$

The reduced prediction signal $pred_{red}$ is obtained by determining or calculating a matrix vector product and adding an offset:

$$pred_{red} = A \cdot bdry_{red} + b$$

$A$ is a matrix that has $W_{red} \cdot H_{red}$ rows and 4 columns if $W = H = 4$ and 8 columns in all other cases. $b$ is a vector of the size $W_{red} \cdot H_{red}$. The matrix $A$ and the offset vector b are taken from one of the following sets $S_0, S_1, S_2$, with an index $idx$ = $idx(W, H)$ defined as follows:

$$idx(W,H) = \begin{cases} 0 & for\ W = H = 4 \\ 1 & for\ max(W,H) = 8 \\ 2 & for\ max(W,H) > 8. \end{cases}$$

Each coefficient of the matrix A is represented with an 8 bit precision. The set $S_0$ consists of or includes 16 matrices $A_0^i$, $i \in \{0, ..., 15\}$ each of which has 16 rows and 4 columns and 16 offset vectors $b_0^i$, $i \in \{0, ..., 16\}$ each of the size 16. Matrices and offset vectors of that set are used for blocks of size $4 \times 4$. The set $S_1$ consists of or includes 8 matrices $A_1^i$, $i \in \{0, ..., 7\}$, each of which has 16 rows and 8 columns and 8 offset vectors $b_1^i$, $i \in \{0, ..., 7\}$ each of the size 16. The set $S_2$ consists of or includes 6 matrices $A_2^i$, $i \in \{0, ..., 5\}$, each of which has 64 rows and 8 columns and of 6 offset vectors $b_2^i$, $i \in \{0, ..., 5\}$ of the size 64.

Interpolation

The prediction signal at the remaining positions is generated from the prediction signal on the subsampled set by linear interpolation which is a single step linear interpolation in each direction. The interpolation is performed first in the horizontal direction and then in the vertical direction regardless of block shape or block size.

Signaling of MIP mode and harmonization with other coding tools

For each Coding Unit (CU) in intra mode, a flag indicating whether an MIP mode is to be applied or not is sent. If an MIP mode is to be applied, MIP mode (*predModeIntra*) is signaled. For an MIP mode, a transposed flag (*isTransposed*), which determines whether the mode is transposed, and a MIP mode Id (*modeId*), which determines which matrix is to be used for the given MIP mode, is derived as follows:

$$isTransposed = predModeIntra \& 1$$

$$modeId = predModeIntra \gg 1$$

The MIP coding mode is harmonized with other coding tools by considering one or more of the following aspects:

-   A Low-Frequency Non-Separable Transform (LFNST) is enabled for the MIP on large blocks. Here, the LFNST transforms of planar mode are used.
-   The reference sample derivation for the MIP is performed exactly as for conventional or non-matrix-based intra prediction modes.

- For the up-sampling step used in the MIP prediction, original reference samples are used instead of down-sampled ones.
- Clipping is performed before up-sampling and not after up-sampling.
- MIP is allowed up to a block size of 64x64 regardless of the maximum transform size.
- The number of MIP modes is 32 for sizeId=0, 16 for sizeId=1 and 12 for sizeId=2.

*Matrix-based position-dependent prediction (MPDP) replacing existing conventional intra modes in ECM*

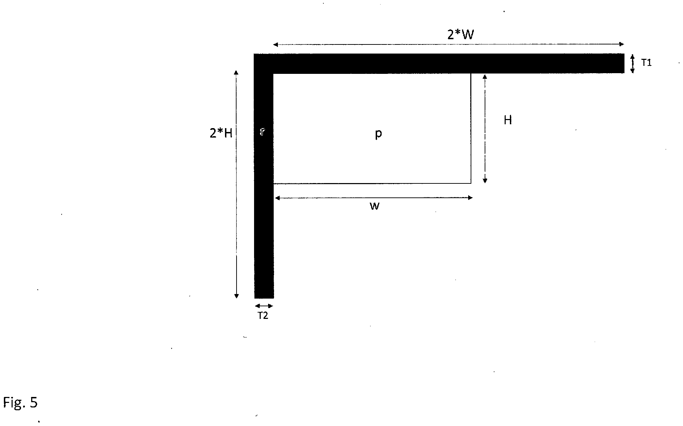

A matrix of weights, which are defined for a block shape and intra mode, is introduced in JVET-AH0209. Those weights are multiplied by the neighbor reference template to derive the prediction samples replacing conventional intra prediction. The weights are applied to the reference samples of the L shaped causal neighborhood template as shown in Fig. 5 illustrating a L shaped neighborhood for a given predicted block.

The reference samples in the causal neighborhood are denoted as r, and F(x,y) is the matrix of weights. Then the prediction P(x,y) can be derived as

$$P(x,y) = \sum_k F(x,y,k)*r(k),$$

where k denotes the index of the reference sample in the template.

This prediction is used for block sizes with both width and height up to 32 (except for 4x32,32x4, 8x32 and 32x8). The template size is 2 for blocks with both width and height up to 16 and it is only used for mode 0, 1, and (2+2*n) where n is from 0 to 32. For other blocks, the template size is set to 1 and is used for mode 0, 1, and (2+4*n). The prediction is only performed for 16x16 positions, and the rest of the samples are generated by bilinear interpolation. For all block sizes, the block shape and the mode-based symmetry is used. A reference length is set to W and H for modes greater than 18 and less than 50 and set to 2*W and 2*H otherwise.

*Modifications to matrix-based intra prediction (MIP) in ECM*

In document JVET-AI0208, matrix sizes of the MIP modes are increased for the blocks with sizes up to 32x32, excluding of 4x32, 32x4, 8x32 and 32x8. The matrices use the L-shaped causal template illustrated in Fig. 5 as input to generate the WxH prediction block.

The prediction of a sample P(x,y) can be derived as:

$$P(x,y) = \sum_k F(x,y,k)*r(k),$$

where r(k) is the kth item in the L-shaped template, and F(x,y) is the matrix weights corresponding to the position (x,y). The size of the prediction block generated by matrix multiplication equals to the current block size.

*Primary and Secondary MPM*

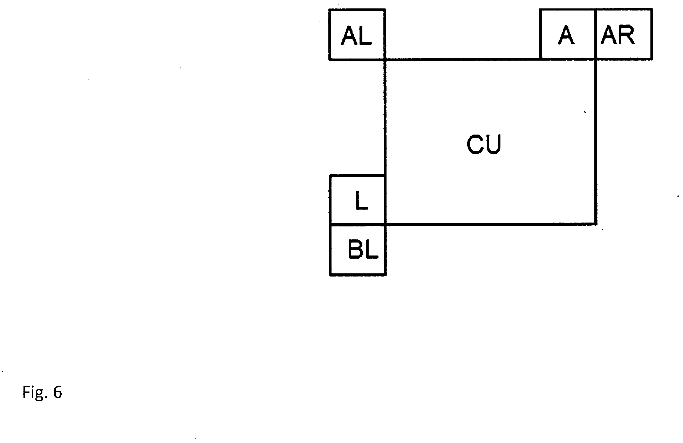

Secondary MPM lists are introduced as described in JVET-D0114. A primary MPM (PMPM) list comprises 6 entries and a secondary MPM (SMPM) list includes 16 entries. A general MPM list with 22 entries is constructed first, and then the first 6 entries in this general MPM list are included into the PMPM list, and the rest of entries of the general MPM list form the SMPM list. The first entry in the general MPM list is the Planar mode. The remaining entries are composed of the intra modes of the left (L), above (A), below-left (BL), above-right (AR), and above-left (AL) neighboring blocks of a currently processed or predicted block and DIMD modes which are sorted in ascending order of SAD cost. Fig. 6 illustrates for a currently processed block CU the neighboring blocks L, A, BL, AR, AL used in the derivation of the general MPM list. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed. If a CU block is vertically oriented, the order of neighboring blocks is A, L, BL, AR, AL; otherwise, it is L, A, BL, AR, AL.

The MPM list is equally divided into four groups and, e.g., at a decoder side, a group index is parsed first from a data stream, like a bitstream. Then, a mode index is further parsed to indicate which mode in the selected group is used for the prediction.

Conventionally, a matrix-based prediction, like the matrix-based position-dependent prediction (MPDP) in ECM software, is used when certain criteria are met, and when used, it always replaces any conventional or non-matrix-based prediction. For example, MPDP always replaces a conventional intra prediction mode when the following criteria are met:

- There exists an available matrix for the prediction direction.
- The block size is allowed for the MPDP prediction.
- Reference samples for conducting the MPDP are available.

However, always replacing a conventional or non-matrix-based prediction by a matrix-based prediction may result in a sub-optimal block prediction, e.g., in cases where the MPDP does not provide for an as accurate prediction as the conventional prediction mode or method. Stated differently, conventionally an IPM to be used for the prediction is selected from an MPM list (PMPM, SMPM, non-MPM) including only conventional IPMs, or, when certain criteria are met, always the MPDP process is used, which may not always be the best choice and leads to the above shortcomings.

Embodiments of the present disclosure addresses the drawbacks in conventional approaches by providing an IPM list, like an MPM list, which is generated/created using both conventional IPMs and MPDP modes, which may result in a list including (1) only conventional IPMs, or (2) only MPDP modes, or (3) both conventional IPMs and MPDP modes. Stated differently, other than conventional approaches which use an IPM list taking into consideration only one of the conventional IPMs and the MPDP modes, embodiments of the present disclosure provide an IPM list, from which the IPM for the prediction is selected, taking into account both matrix-based and non-matrix-based prediction modes.

Thus, the present disclosure provides various approaches for improving a prediction performance by adaptively utilizing a matrix-based prediction, like MPDP, and a conventional or non-matrix-based prediction intra prediction for a coding block. The present disclosure is advantageous as the prediction performance is improved by appropriately making use of a matrix-based prediction and/or a non-matrix-based intra prediction. Further, embodiments of the present disclosure are advantageous because all MPDP and conventional modes are considered for a given block prediction adaptively without increasing a number of rate-distortion optimization choices at the encoder side nor introducing any additional signaling overhead for the MPDP and conventional methods.

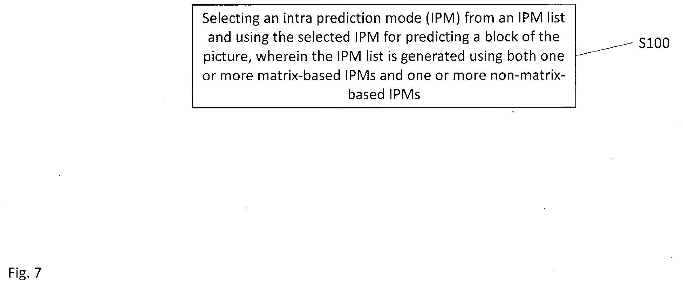

Fig. 7 illustrates a flow diagram of an embodiment of a method of processing one or more blocks of a picture. The method includes one or more of the following:

S 100: Selecting S 100 an intra prediction mode (IPM) from an IPM list, and using the selected IPM for predicting a block of the picture, wherein the IPM list is generated using both one or more matrix-based IPMs and one or more non-matrix-based IPMs.

Thus, embodiments of the present disclosure address the drawbacks in conventional approaches by providing an approach, which, for predicting one or more blocks of a picture, selects an intra prediction mode (IPM) from an IPM list and uses the selected IPM for predicting a block of the picture. Other than in conventional approaches, the IPM list is generated using both one or more matrix-based IPMs and one or more non-matrix-based IPMs.

In the following description of embodiments of the present disclosure, the term conventional or non-matrix based intra prediction refers to angular and non-angular (planar and DC) prediction modes which do not use matrix-based mechanism for sample prediction. Further, the matrix-based position-dependent prediction (MPDP) of JVET-AH0209 is used as an example of a matrix-based prediction throughout following description of embodiments of the present disclosure. However, the present disclosure is not limited to the above matrix based and non-matrix based intra prediction. In accordance with other embodiments, the inventive approach may be used for other matrix-based intra prediction methods, e.g., when such other matrix-based intra prediction methods are used to replace conventional intra prediction methods and/or include a mechanism that maps the defined matrices to a corresponding conventional intra prediction mode.

In accordance with embodiments of the present disclosure, N target intra prediction modes may be defined for coding a block, and the N target intra prediction modes may comprise either or both of conventional intra prediction modes and matrix-based position-dependent prediction (MPDP) modes.

In accordance with embodiments of the present disclosure, a codec may comprise N conventional intra prediction modes, the same number as the number of target modes, and M MPDP modes.

In accordance with embodiments of the present disclosure, a list of P candidates (candidate list) comprising N conventional intra prediction modes and M MPDP modes may be generated. For a target block to be predicted, the list of P candidates is then sorted based on a prediction performance of each mode in the list over one or more template samples for the target block. Then, the N best performing candidates, i.e., IPMs (conventional and/or non-conventional) are selected from the sorted list and used as eligible intra prediction modes for the target block.

In accordance with embodiments of the present disclosure, the selected eligible N candidates for the target block may be divided into multiple sub-lists such as a primary most probable mode list (PMPM), a secondary most probable mode list (SMPM), and a non-most probable mode list (non-MPM). This allocation to sub-lists may be done in a way that the PMPM, the SMPM and the non-MPM lists follow the same sorted order as when sorting the list of P candidates. For example, the candidates in the PMPM may be the ones that have a better prediction performance on the template samples than the SMPM candidates, and the SMPM candidates include modes that have a better prediction performance over the template than the non-MPM candidates.

In accordance with embodiments of the present disclosure, the remaining M (= P - N) non-eligible modes may be discarded from the intra coding options for the target block.

In accordance with embodiments of the present disclosure, all or a subset of the remaining M (= P - N) non-eligible modes may be allocated into another list of intra coding modes that could be potentially used for block prediction. For example, all or a subset of remaining M modes may be added to a secondary non-MPM list to be considered for predicting the target block.

In accordance with embodiments of the present disclosure, the template for sorting the candidates refers to reconstructed samples from a neighborhood of the block.

In accordance with embodiments of the present disclosure, the template size where the performance is calculated is the same for the conventional and MPDP methods.

In accordance with embodiments of the present disclosure, the template size where the performance is calculated is not the same for the conventional and MPDP methods. For this case, the distortion over the template for each method may be normalized in such a way that the prediction performances are comparable between conventional and MPDP methods. For example, the distortion may be normalized based on a number of pixels in each template area.

In accordance with embodiments of the present disclosure, the use of the inventive approach may be signaled explicitly for each block, e.g., through a block-level activation flag. For example, an encoder may decide to apply the inventive approach for a block based on a rate distortion optimization (RDO) at the encoder side and indicate the choice in a bitstream. For example in VVC there are 67 conventional IPMs and all the signaling is done according to this number. Nowadays in ECM there are MPDP variants of modes which replace the conventional modes if applicable while keeping the signaling aspect intact. In accordance with the inventive approach the signaling aspect is kept based on the 67 modes while allowing the codec to adaptively select the list of 67 modes based on conventional and MPDP modes by keeping the best performing variants in each category using the template cost. So, in the end, there may by conventional and MPDP modes in the final list as best performing ones.

In accordance with embodiments of the present disclosure, the activation or deactivation of the inventive approach may be determined implicitly, e.g., at a decoder side, considering certain criteria, e.g., one or more of the following:

- The inventive approach may be enabled only for certain block sizes.
- The inventive approach may be enabled only if one or more of the template side samples are available for a block.
- inventive approach may be enabled only if the texture analysis method, such as TIMD, has been utilized for the codec.
- The use of such methods may be controlled by an SPS, PPS, or any other HLS flag.

In accordance with embodiments of the present disclosure, there may be one or more high-level syntax elements (HLS), such as a Sequence Parameter Set (SPS), a Video Parameter Set (VPS) or a Picture Parameter Set (PPS) defined for the codec that enables or disables the inventive approach, e.g., in certain granularities such as an entire sequence, an entire frame or picture, a coding tree unit (CTUs) or a coding unit (CUs). For example, the inventive approach may be enabled/disabled at:

- a sequence-level at which the use of the IPM list is enabled or disabled for all coding units (CUs) in all coding tree units (CTUs) of all frames of a video content, or
- a frame-level at which the use of the IPM list is enabled or disabled for all coding units (CUs) of all coding tree units (CTUs) in a frame or picture, or
- a CTU-level at which the use of the IPM list is enabled or disabled at the beginning of each coding tree unit (CTU), or
- a CU-level at which the use of the IPM list is enabled or disabled for each individual coding unit (CU).

Further embodiments of the present disclosure are now described in more detail.

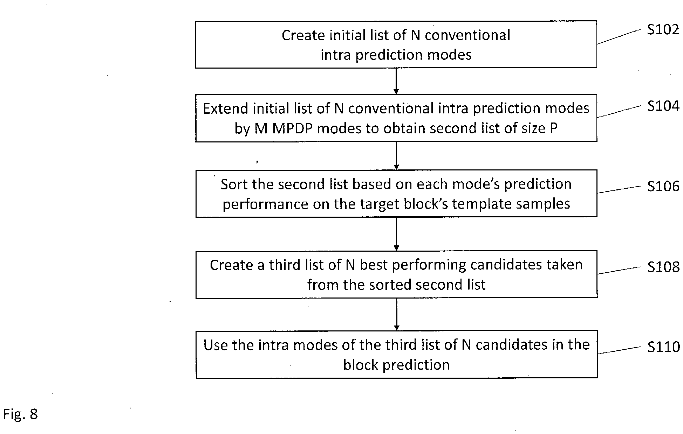

Fig. 8 illustrates a flow diagram of a process for a mode decision in accordance with embodiments of the present disclosure. At S102 (Step 1) an initial list of N intra prediction modes is created in which the initial list contains only conventional intra prediction modes. At S104 (Step 2), from the initial list, a second extended list of size P (P > N), i.e., a candidate list including P candidate IPMs, is generated in which, in addition to the N conventional modes of the initial list, also M candidates from MPDP modes corresponding to the modes of the initial list are inserted. At S106 (Step 3), the second list is sorted based on each mode's prediction performance on the target block's template samples. At S 108 (Step 4), from the sorted second list, a third list of N candidates is created by taking the N best performing candidates on the template from the second list. At S 110 (Step 5) the intra modes of the third list of N candidates are used in the block prediction.

In accordance with embodiments, the M = P - N worst performing candidates from the sorted second list, i.e., modes excluded from the third list, are excluded from usage for the prediction of the target block. In accordance with other embodiments, the M = P - N worst performing candidates from the sorted second list may be added to a fourth list and used in prediction process of the target block independent from the third list of candidates.

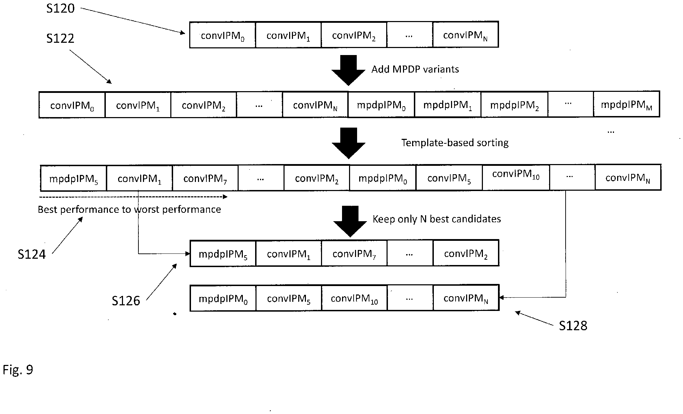

Fig. 9 illustrates a process in accordance with embodiments of the present disclosure for generating the IPM list, also referred to as the target candidates list, for a currently processed or predicted block of a picture. A codec is assumed that comprises N (N being an integer $\geq$ 1) conventional intra prediction modes to be considered for block prediction. For example, VVC and ECM include 67 conventional intra prediction modes two of which are non-angular modes (planar and DC) and 65 of which are angular modes. These N modes may be divided into multiple categories for efficient mode signaling. For example, in ECM these modes are allocated into three categories for signaling as below:

- A primary most probable modes (PMPM) list including 6 candidates.
- A secondary most probable modes (SMPM) list including 16 candidates.
- Non-MPM list including the remaining modes.

Assuming that there exist M (M $\leq$ N) MPDP modes, each MPDP mode may have a corresponding mode in the existing N conventional modes. In one scenario, the numbers of MPDP and conventional modes are equal. In other words, all MPDP and conventional modes have corresponding modes. In another scenario (M < N), the MPDP modes can map only to subset of the conventional modes.

In accordance with other embodiments, there may be less conventional IPMs than MPDPs (N<M) so that a conventional mode may be associated with two or more MPDPs modes.

All MPDP and conventional modes are considered for a block prediction adaptively for every block without increasing a number of rate-distortion optimization choices at the encoder side nor introducing additional signaling overhead for MPDP and conventional methods. This is achieved , according to embodiments, by adaptively selecting the N target candidates (forming the IPM list) from P available choices (P = N conventional modes plus M MPDP modes) for a target block to be coded. In other words, the adaptive selection of modes is done for each block separately and based on the block's characteristics. As is illustrated in Fig. 9, as S120 (Step 1) an initial or first list of N conventional intra prediction modes is created. The initial or first list includes the conventional intra prediction modes $convIPM_0$ to $convIPM_N$. At S122 (Step 2), from the first list, a second list of modes is generated by adding the corresponding MPDP modes of the first list to the second list along with the conventional modes of the first list. The second list has a size P = N + M and' includes the conventional intra prediction modes $convIPM_0$ to $convIPM_N$ and the MPDP modes $mpdpIPM_0$ to $mpdpIPM_M$. Thus, a S122, a secondary list of P candidates (P > N) is formed which includes the initial list and the corresponding M MPDP candidates. At S124 (Step 3) the P candidates in the second list are sorted based on a prediction performance of each mode in the list over the target block's template samples. In accordance with embodiments, the secondary list is sorted using a template-based sorting mechanism as follows:.

- Get a template of samples from reconstructed neighborhood areas of the block.
- Predict the template samples using each mode in the second list.
- Determine or calculate the prediction distortion on the template by comparing the prediction to the reconstructed samples of the template.
- Sort the second list based on the prediction distortion values. In accordance with embodiments, the sorting may be done from best performing to worst performing modes.

At S126 (Step 4) a third list of candidates having a size N is created, to which the N best performing candidates from sorted second list are added. In accordance with embodiments, the third list may follow the candidates' order of the first N candidates in the sorted second list. In other words, the third list candidates may also by sorted from best to worst performing candidates. At step S128 (Step 5) the N candidates from the third list are used as the block prediction options. In Fig. 9, convIPM refers to conventional intra prediction modes and mpdpIPM refers to MPDP intra prediction modes.

In accordance with embodiments, the third candidates list may include both conventional and MPDP modes or only conventional modes or only MPDP modes for a specific IPM. For example, there may be a block in which both the conventional and MPDP variant of IPM 5 are included in the third list while neither the conventional nor the MPDP variant of IPM 16 are included in the third list as their performance on the block's template were not as efficient as other modes.

Moreover, the candidates in the third list may be added with the same sorted order in the sorted second list, i.e., based on their performance over the template through step 3 in above. In accordance with other embodiments, the third list may be re-sorted using other factors such as:

- A different cost metric on the template than the one used in step 3, e.g., the cost metric in step 3 may be "SATD", but the cost metric for re-sorting the third list candidates may be "SAD" or the other way around. In all these cases, the sorting is done based on the prediction performance on template samples. But different cost metrics (SAD, SATD, SSE, etc.) may be used in the different stages of the inventive process.
- Based on the block dimensions.
- Based on an availability of the modes in adjacent and/or non-adjacent neighboring blocks

In accordance with embodiments, after generating the third candidates list which consists of N modes, the IPM list (third candidates list) may by split into corresponding PMPM, SMPM and non-MPM lists. Assuming that S1, S2 and S3 are the target number of the candidates in the PMPM, SMPM and non-MPM lists, with the sum of S1, S2 and S3 equal to N, the following distribution may apply:

- The first S1 number of candidates from the third list are added to PMPM list.
- The next S2 number of candidates from the third list are added to SMPM list.
- The last S3 number of candidates from the third list are added to non-MPM list.

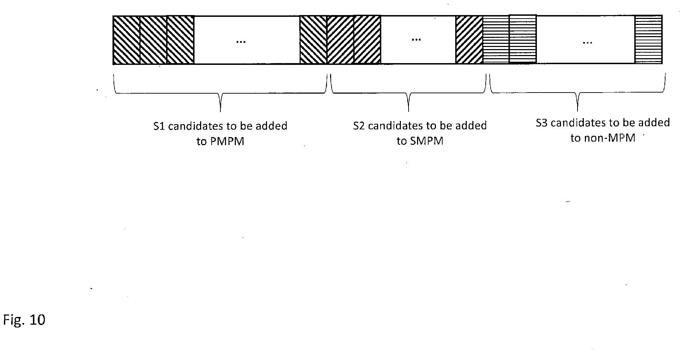

Fig. 10 illustrates the dividing of the final or third list of N candidates into the PMPM, SMPM and non-MPM lists. Fig. 10 illustrates the third list created from N best performing modes in sorted second list from which

In accordance with embodiments, the sorting mechanism in step 3 which is applied to the candidates of the second list may use a texture analysis method as part of the process. For example, a TIMD-like method may be applied to evaluate the performance of each candidate over the template samples. Here, the template may be defined as a set of samples from the reconstructed neighborhood of the target block.

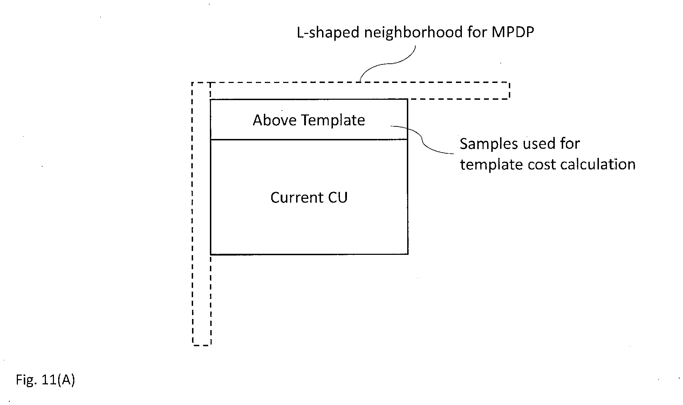

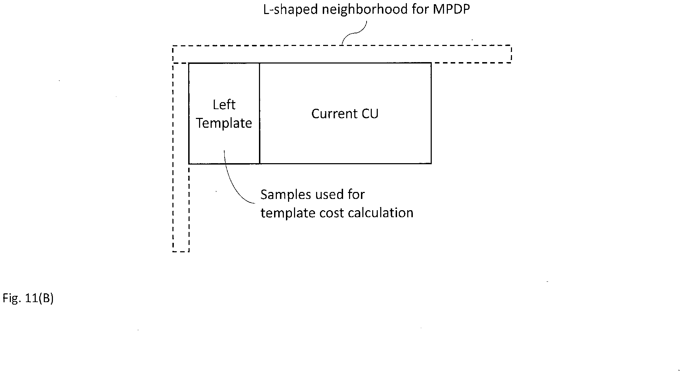

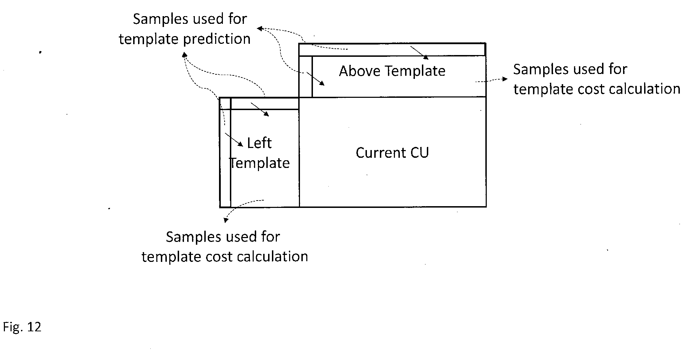

In this example, the template is a template area above and/or left, and the template area above and/or left refer to the reconstructed samples from the block neighborhood. Fig. 11(A) and Fig. 11(B) illustrate examples of a template prediction using the MPDP method, with Fig. 11(A) illustrating an above template prediction using the MPDP method, and Fig. 11(B) illustrating a left template prediction using the MPDP method. In Fig. 11(A) and Fig. 11(B), the L-shaped template for the MPDP is used for predicting the "left template" and "above template" samples. However, when it comes to actual block prediction using the MPDP method, the L-shaped template that is illustrated in Fig. 5 will be used. Fig. 12 illustrates an example of a template prediction using a conventional prediction methods, such as TIMD.

In accordance with embodiments, in order to have comparable template costs between the MPDP and the conventional predictions, the template areas for the cost calculation or determination may remain the same. Alternatively, if the template areas for the cost calculation or determination of the two methods have different sizes, the calculated or determined costs may be normalized based on the number of pixels in each template.

In accordance with embodiments, the cost or distortion calculation or determination over the template may use one or more of the distortion metrics such as sum of absolute differences (SAD), sum of square errors (SSE), sum of absolute transform differences (SATD) or any other method. Further, the template size may be fixed size, or it may be determined based on block size.

In accordance with embodiments of the present disclosure, the target number of N candidates is preserved by not adding extra modes which would require additional signaling in the final list, i.e. the third or IPM list, of candidates for the intra prediction. Consequently, the number of candidates in the PMPM, SMPM and non-MPM lists are unchanged compared to a reference codec, like VVC, ECM, .... Thus, no additional signaling is required for the intra prediction modes in the presence of MPDP and conventional methods. Moreover, embodiments of the present disclosure adaptively use MPDP methods and conventional prediction methods without replacing the conventional methods always as in existing methods of ECM.

In accordance with embodiments, the exact mode that is used for coding a block may not be determined in the parsing stage at the decoder side, rather it is derived at the sample reconstruction stage. During the parsing stage only flags related to the MPM lists are parsed or determined and/or an index of the prediction mode from the corresponding MPM lists is parsed or determined. However, the exact IPM or mode is determined later in the block reconstruction stage and after the above process is executed. After the final or third list of N candidates is formed and potentially its candidates are split into the PMPM, SMPM and non-MPM lists, then the parsed flag(s) and index(es) from the bitstream is utilized to select the intra prediction mode from the lists for predicting the block.

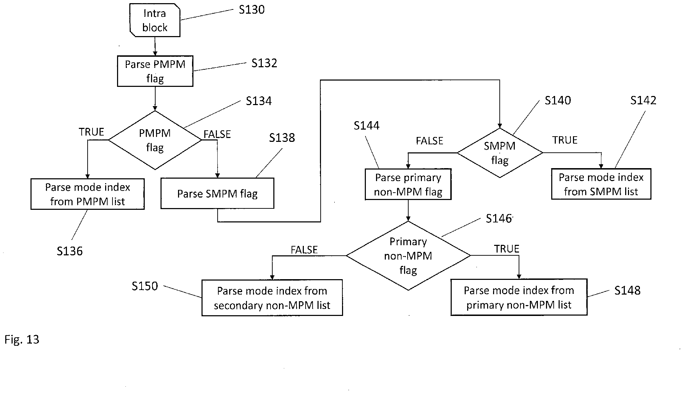

In accordance with embodiments, the M = P - N last candidates from the sorted second list may be added to a fourth list of candidates, or they may be discarded from the intra prediction mode options for the target block. In case the candidates are added into a fourth list, the fourth list may be considered as a secondary non-MPM list. This secondary non-MPM list may be also considered as part of the codec's options for intra prediction modes. The secondary non-MPM list may include only a subset of modes from the fourth list in order to reduce the signaling overhead. For example, only the n best candidates from the remaining M candidates may be added into secondary non-MPM list. Fig. 13 illustrates a parsing mechanism when a secondary non-MPM is used in accordance with embodiments of the present disclosure. After receiving at S 130 a bitstream including information about an intra block to be predicted, the bitstream is parsed S132 for a PMPM flag. At S134 it is determined whether the PMPM flag is set. If the PMPM flag is set (TRUE), the mode index is parsed S136 from the PMPM list and used later in the block reconstruction stage for determining the exact IPM to be used for the prediction. If the PMPM flag is not set (FALSE), the bitstream is parsed S138 for a SMPM flag. At S140 it is determined whether the SMPM flag is set. If the SMPM flag is set (TRUE), the mode index is parsed S142 from the SMPM list and used later in the block reconstruction stage for determining the exact IPM to be used for the prediction. If the PMPM flag is not set (FALSE), the bitstream is parsed S144 for a primary non-MPM flag. At S146 it is determined whether the primary non-MPM flag is set. If the primary non-MPM flag is set (TRUE), the mode index is parsed S148 from the primary non-MPM list and used later in the block reconstruction stage for determining the exact IPM to be used for the prediction. If the PMPM flag is not set (FALSE), the mode index is parsed S150 from a secondary non-MPM list and used later in the block reconstruction stage for determining the exact IPM to be used for the prediction

In accordance with other embodiments, the inventive approach may be applied to smaller target lists to be generated for block prediction. In other words, the inventive approach may be applied on one or more of the PMPM, SMPM and non-MPM lists only. For example, the PMPM, SMPM and non-MPM lists may be generated according to prior art. Then the inventive approach may be applied within each category of lists separately. Stated differently, one or more of the PMPM, SMPM and non-MPM lists may be an IPM list as described herein and generated using both one or more matrix-based IPMs and one or more non-matrix-based IPMs.

In accordance with embodiments, initially, it may be determined whether a matrix-based intra prediction method, e.g., MPDP, is allowed. For example, the matrix-based intra prediction method is allowed when one or more of the following criteria are met: (1) A matrix-based intra prediction is available for a prediction direction. (2) A block size is allowed for the matrix-based intra prediction. (3) Reference samples for conducting the matrix-based intra prediction are available. If the MPDP is not allowed (NO), a conventional IPM list is used, otherwise, if the MPDP is allowed (YES), the inventive approach is used for creating the IPOM list.

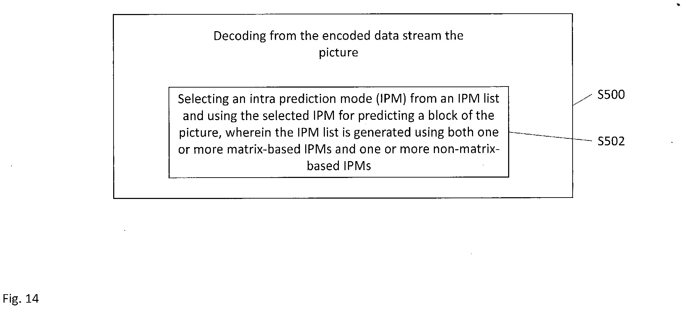

Fig. 14 illustrates a flow diagram of a method for decoding an encoded data stream, the encoded data stream including data representing a picture. The method includes the following:

S500: Decoding from the encoded data stream the picture.

Decoding the picture comprises selecting S502 an intra prediction mode (IPM) from an IPM list, and using the selected IPM for predicting a block of the picture, wherein the IPM list is generated using both one or more matrix-based IPMs and one or more non-matrix-based IPMs.

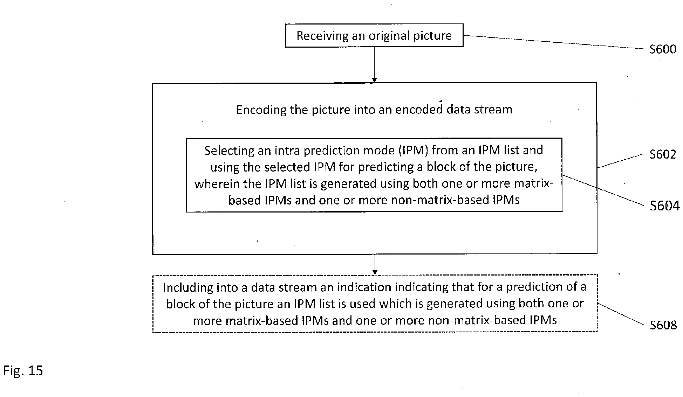

Fig. 15 illustrates a flow diagram of a method for encoding a picture into an encoded data stream. The encoded data stream includes data representing the picture and the method includes the following:

S600: Receiving an original picture.
S602: Encoding the picture into the encoded data stream.

Encoding the picture comprises selecting S604 an intra prediction mode (IPM) from an IPM list, and using the selected IPM for predicting a block of the picture, wherein the IPM list is generated using both one or more matrix-based IPMs and one or more non-matrix-based IPMs

Optionally, the method comprises including S608 into the data stream or bitstream an indication concerning the use of the IPM list provided in accordance with embodiments of the present disclosure, e.g., an indication, e.g., a flag or an index, the indication indicating that for a prediction of a block of the picture an IPM list is used which is generated using both one or more matrix-based IPMs and one or more non-matrix-based IPMs.

Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

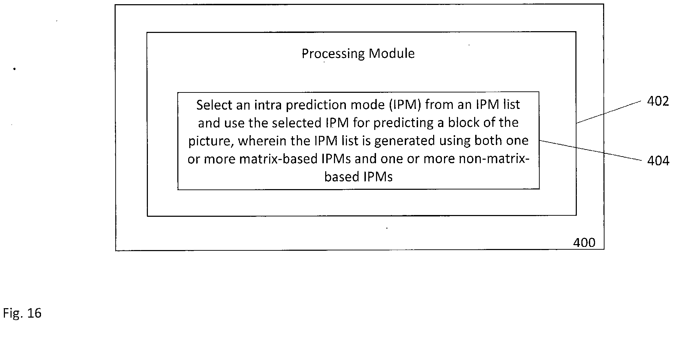

Fig. 16 illustrates a block diagram of an apparatus 400 of predicting one or more blocks of a picture in accordance with embodiments of the present disclosure. The apparatus 400 includes a processing module 402. The processing module is configured to select 404 an intra prediction mode (IPM) from an IPM list and use the selected IPM for predicting a block of the picture, wherein the IPM list is generated using both one or more matrix-based IPMs and one or more non-matrix-based IPMs.

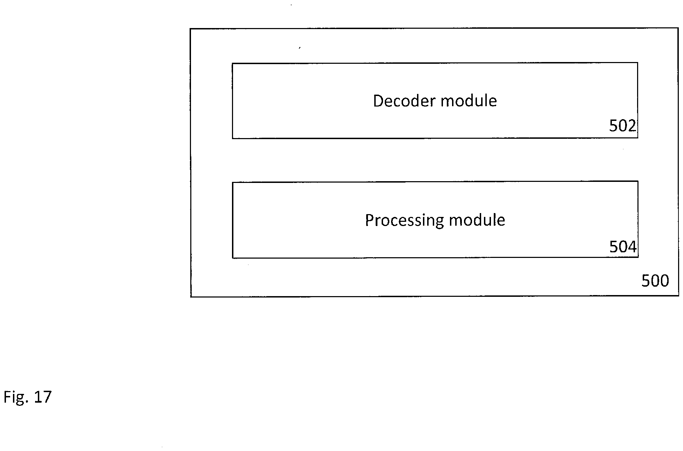

Fig. 17 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture. 504: A processing module, e.g., a prediction module 170 as depicted in Fig. 2. The prediction module 502 is configured to operate in accordance with embodiments of the present disclosure. For example, the prediction module 502 includes an apparatus as described with reference to Fig. 16.

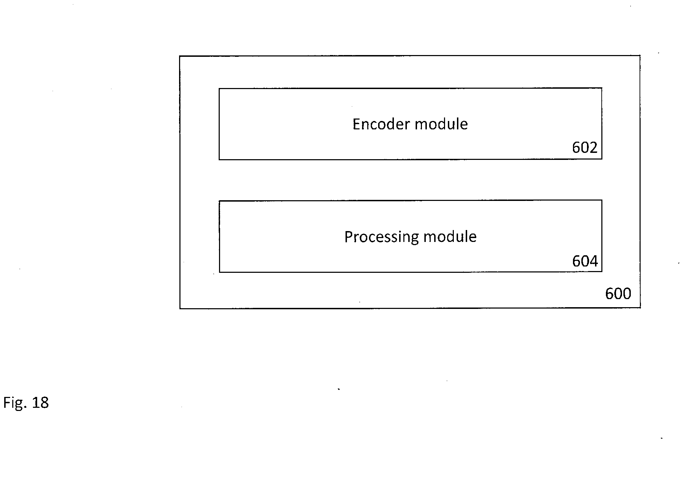

Fig. 18 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.

604: A prediction module, e.g., a prediction module 124 as depicted in Fig. 1. The prediction module 602 is configured to operate in accordance with embodiments of the present disclosure. For example, the prediction module 502 includes an apparatus as described with reference to Fig. 16.

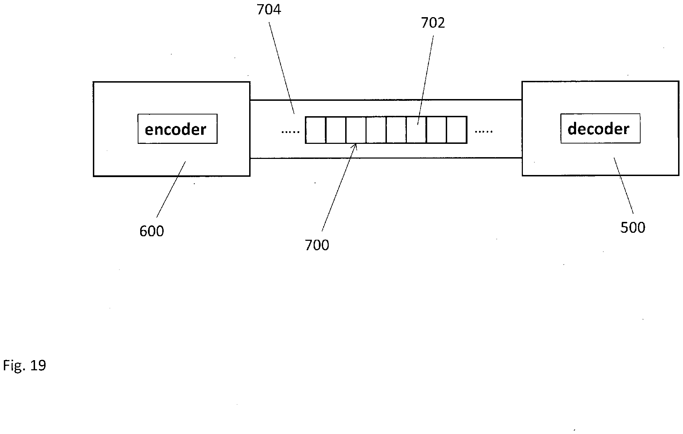

Fig. 19 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication concerning the use of the IPM list provided in accordance with embodiments of the present disclosure, e.g., an indication, e.g., a flag or an index, the indication indicating that for a prediction of a block of the picture an IPM list is used which is generated using both one or more matrix-based IPMs and one or more non-matrix-based IPMs.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

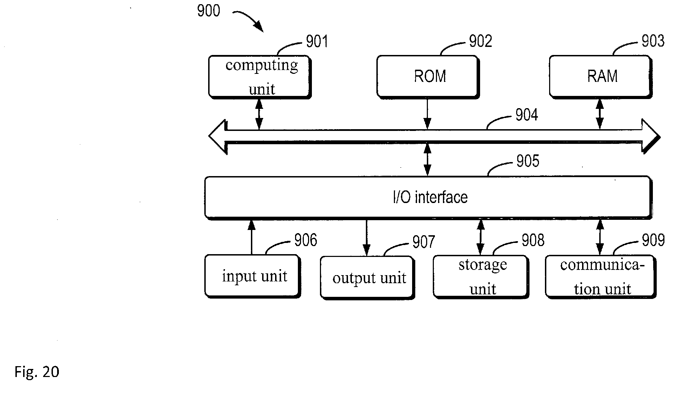

Fig. 20 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a standalone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of predicting one or more blocks of a picture, the method comprising: selecting an intra prediction mode (IPM) from an IPM list, and using the selected IPM for predicting a block of the picture, wherein the IPM list is generated using both one or more matrix-based IPMs and one or more non-matrix-based IPMs.

A 2nd embodiment provides the method of the 1st embodiment, wherein the IPM list is generated such that the IPM list comprises one or more matrix-based IPMs and/or one or more non-matrix-based IPMs.

A 3rd embodiment provides the method of the 1st or 2nd embodiment, wherein the IPM list is generated from N non-matrix-based IPMs, with N being an integer $\geq 1$, and from M matrix-based IPMs, with M being an integer $\geq 1$, wherein N $\geq$ M, and wherein

- N = M so that for each non-matrix-based IPMs there is a corresponding matrix-based IPM, or
- N > M so that each matrix-based IPM corresponds to one or more non-matrix-based IPMs,
- N < M so that one or more of the non-matrix-based IPM are associated with two or more matrix-based IPMs.

A 4th embodiment provides the method of any one of the preceding embodiments, wherein the IPM list is generated by

- generating a candidate list comprising N non-matrix-based IPMs, with N being an integer $\geq 1$, and M matrix-based IPMs, with M being an integer $\geq 1$, and
- selecting from the candidate list the N best performing IPMs.

A 5th embodiment provides the method of the 4th embodiment, wherein the candidate list is generated from an initial list of the N non-matrix-based IPMs to which the M matrix-based IPMs are allocated.

A 6th embodiment provides the method of the 4th or 5th embodiment, wherein the N best performing IPMs are selected using a predefined metric.

A 7th embodiment provides the method of the 6th embodiment, wherein the predefined metric comprises one or more for the following:

- a prediction performance of each IPM in the candidate list over one or more template samples for the block,
- an availability of IPMs modes in adjacent and/or non-adjacent neighboring blocks.

An 8th embodiment provides the method of the 7th embodiment, wherein a prediction performance of an IPM in the candidate list is determined by

- obtaining a prediction of one or more template samples from one or more neighborhood areas of the block using the IPM, and
- determining for the IPM a template prediction distortion on the one or more template samples by comparing the prediction to one or more reconstructed template samples from the one or more neighborhood areas of the block.

A 9th embodiment provides the method of the 8th embodiment, wherein the one or more reconstructed template samples are from a template area above and/or left of the block, and wherein the template areas for determining the template prediction distortion for the matrix-based and non-matrix-based IPMs are the same.

A 10th embodiment provides the method of the 8th embodiment, wherein the one or more reconstructed template samples are from a template area above and/or left of the block, and wherein the template areas for determining the template prediction distortion for the matrix-based and non-matrix-based IPMs are different, and wherein the determined template prediction distortion are normalized, e.g., on a number of pixels in each template area.

An 11th embodiment provides the method of any one of the 8th to 10th embodiments, wherein the template prediction distortion are determined using one or more distortion metrics, e.g., a sum of absolute differences (SAD), sum of square errors (SSE), or a sum of absolute transform differences (SATD).

A 12th embodiment provides the method of any one of the 4th to 11th embodiments, wherein the candidate list is sorted using the predefined metric, and the N first IPMs of the sorted candidate list are allocated to the IPM list.

A 13th embodiment provides the method of the 12th embodiment, wherein the IPM list comprises a plurality of sub-lists to which the N first IPMs of the sorted candidate list are allocated.

A 14th embodiment provides the method of the 13th embodiment, wherein the plurality of sub-lists comprises:

- a primary most probable mode (PMPM),
- a secondary most probable mode (SMPM), and
- a non-most probable mode (non-MPM).

A 15th embodiment provides the method of the 14th embodiment, wherein

- the primary most probable mode (PMPM) list includes the first n1 of the N first IPMs of the sorted candidate list,
- the secondary most probable mode (SMPM) list includes the next n2 of the N first IPMs of the sorted candidate list, and
- the non-most probable mode (non-MPM) list includes the last n3 of the N first IPMs of the sorted candidate list, with n1 + n2+ n3 = N.

A 16th embodiment provides the method of any one of the 4th to 15th embodiments, wherein the remaining M IPMs of the candidate list are discarded.

A 17th embodiment provides the method of any one of the 4th to 15th embodiments, wherein some or all of the remaining M IPMs of the candidate list are allocated to a second IPM list, e.g., to second non-MPM list, to be considered for predicting the block.

An 18th embodiment provides the method of any one of the preceding embodiments, wherein using the IPM list for the prediction of the block is decided using a rate-distortion optimization (RDO).

A 19th embodiment provides the method of any one of the preceding embodiments, wherein a use of the IPM list for the prediction of the block is signaled for the block in a data stream.

A 20th embodiment provides the method of any one of the 1st to 18th embodiments, wherein a use of the IPM list for the prediction of the block is not signaled for the block in a data stream and is determined implicitly using one or more predefined criteria.

A 21st embodiment provides the method of the 20th embodiment, wherein the one or more predefined criteria comprise one or more of the following:

- the IPM list is used only for certain block sizes,
- the IPM list is used only in case one or more template samples are available for the block,
- the IPM list is used only when a certain texture analysis method, such as template-based intra mode derivation (TIMD), was utilized for a codec for predicting the block.

A 22nd embodiment provides the method of any one of the 1st to 17th embodiments, wherein a use of the IPM list for the prediction of the block is not signaled for the block in a data stream and is enabled or disabled using one or more high-level syntax elements (HLS), such as a Sequence Parameter Set (SPS), a Video Parameter Set (VPS) or a Picture Parameter Set (PPS) defined for a codec for predicting the block.

A 23rd embodiment provides the method of any one of the preceding embodiments, wherein a use of the IPM list for the prediction of the block is enabled or disabled at one of a plurality of different processing levels.

A 24th embodiment provides the method of the 23rd embodiment, wherein the plurality of different processing levels comprises:

- a sequence-level at which the use of the IPM list is enabled or disabled for all coding units (CUs) in all coding tree units (CTUs) of all frames of a video content,
- a frame-level at which the use of the IPM list is enabled or disabled for all coding units (CUs) of all coding tree units (CTUs) in a frame or picture,
- a CTU-level at which the use of the IPM list is enabled or disabled at the beginning of each coding tree unit (CTU),
- a CU-level at which the use of the IPM list is enabled or disabled for each individual coding unit (CU).

A 25th embodiment provides the method of any one of the preceding embodiments, wherein the method comprises: determining that a matrix-based intra prediction is allowed.

A 26th embodiment provides the method of any one of the preceding embodiments, wherein

the matrix-based intra prediction includes a Matrix weighted Intra Prediction (MIP) method or a Matrix-based position-dependent prediction (MPDP) method, and
the non-matrix-based intra prediction includes an angular Intra Prediction Mode (IPM) method or a non-angular Intra Prediction Mode (IPM) method.

A 27th embodiment provides a method for decoding an encoded data stream, the encoded data stream including data representing a picture, and the method comprising:

decoding from the encoded data stream the picture,
wherein decoding the picture comprises predicting one or more blocks of the picture according to the method of any one of the preceding embodiment.

A 28th embodiment provides a method for encoding a picture into an encoded data stream, the encoded data stream including data representing the picture, and the method comprising:

receiving a picture, and
encoding the picture into the encoded data stream,
wherein encoding the picture comprises predicting one or more blocks of the picture according to the method of any one of the 1st to 27th embodiments.

A 29th embodiment provides a non-transitory computer-readable storage medium comprising instructions which, when executed by a computer, cause the computer to carry out the method of any one of the preceding embodiments.

A 30th embodiment provides an apparatus of processing one or more blocks of a picture, the apparatus comprising: a processing module, wherein the processing module is configured to select an intra prediction mode (IPM) from an IPM list, and use the selected IPM for predicting a block of the picture, wherein the IPM list is generated using both one or more matrix-based IPMs and one or more non-matrix-based IPMs.

A 31st embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to the 30th embodiment.

A 32nd embodiment provides an apparatus for encoding a picture into an encoded data stream, the encoded data stream including data representing the picture, the apparatus comprising:

an encoder module configured to receive a picture and to encode the picture into the . encoded data stream, and
a prediction module, the prediction module including an apparatus according to the 30th embodiment.

A 33rd embodiment provides a data stream having encoded thereinto a picture, wherein the data stream comprises: an indication, e.g., a flag or an index, the indication indicating that for a prediction of a block of the picture an IPM list is used which is generated using both one or more matrix-based IPMs and one or more non-matrix-based IPMs.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of predicting one or more blocks of a picture, the method comprising:
selecting an intra prediction mode (IPM) from an IPM list, and using the selected IPM for predicting a block of the picture, wherein the IPM list is generated using both one or more matrix-based IPMs and one or more non-matrix-based IPMs.

2. The method of claim 1, wherein the IPM list is generated such that the IPM list comprises one or more matrix-based IPMs and/or one or more non-matrix-based IPMs.

3. The method of claim 1 or 2, wherein the IPM list is generated by

- generating a candidate list comprising N non-matrix-based IPMs, with N being an integer $\geq$ 1, and M matrix-based IPMs, with M being an integer $\geq$ 1, and
- selecting from the candidate list the N best performing IPMs.

4. The method of claim 4, wherein the N best performing IPMs are selected using one or more for the following:

- a prediction performance of each IPM in the candidate list over one or more template samples for the block,
- an availability of IPMs modes in adjacent and/or non-adjacent neighboring blocks.

5. The method of claim 4, wherein a prediction performance of an IPM in the candidate list is determined by

- obtaining a prediction of one or more template samples from one or more neighborhood areas of the block using the IPM, and
- determining for the IPM a template prediction distortion on the one or more template samples by comparing the prediction to one or more reconstructed template samples from the one or more neighborhood areas of the block.

6. The method of claim 5, wherein

the one or more reconstructed template samples are from a template area above and/or left of the block, and wherein the template areas for determining the template prediction distortion for the matrix-based and non-matrix-based IPMs are the same, or

the one or more reconstructed template samples are from a template area above and/or left of the block, and wherein the template areas for determining the template prediction distortion for the matrix-based and non-matrix-based IPMs are different, and wherein the determined template prediction distortion are normalized, e.g., on a number of pixels in each template area.

7. The method of any one of claims 3 to 6, wherein the candidate list is sorted using the predefined metric, and the N first IPMs of the sorted candidate list are allocated to the IPM list.

8. The method of claim 7, wherein the IPM list comprises:

- a primary most probable mode (PMPM) list which includes the first n1 of the N first IPMs of the sorted candidate list,
- a secondary most probable mode (SMPM) list which includes the next n2 of the N first IPMs of the sorted candidate list, and
- a non-most probable mode (non-MPM) list which includes the last n3 of the N first IPMs of the sorted candidate list, with n1 + n2+ n3 = N.

9. The method of any one of claims 3 to 8, wherein

the remaining M IPMs of the candidate list are discarded, or
some or all of the remaining M IPMs of the candidate list are allocated to a second IPM list, e.g., to second non-MPM list, to be considered for predicting the block.

10. The method of any one of the preceding claims, wherein a use of the IPM list for the prediction of the block is signaled for the block in a data stream.

11. The method of any one of claims 1 to 9, wherein a use of the IPM list for the prediction of the block is not signaled for the block in a data stream and is determined implicitly using one or more of the following:

- the IPM list is used only for certain block sizes,

- the IPM list is used only in case one or more template samples are available for the block,
- the IPM list is used only when a certain texture analysis method, such as template-based intra mode derivation (TIMD), was utilized for a codec for predicting the block.

12. The method of any one of the preceding claims, wherein a use of the IPM list for the prediction of the block is enabled or disabled at one of the following processing levels:

- a sequence-level at which the use of the IPM list is enabled or disabled for all coding units (CUs) in all coding tree units (CTUs) of all frames of a video content,
- a frame-level at which the use of the IPM list is enabled or disabled for all coding units (CUs) of all coding tree units (CTUs) in a frame or picture,
- a CTU-level at which the use of the IPM list is enabled or disabled at the beginning of each coding tree unit (CTU),
- a CU-level at which the use of the IPM list is enabled or disabled for each individual coding unit (CU).

13. The method of any one of the preceding claims, wherein

the matrix-based intra prediction includes a Matrix weighted Intra Prediction (MIP) method or a Matrix-based position-dependent prediction (MPDP) method, and
the non-matrix-based intra prediction includes an angular Intra Prediction Mode (IPM) method or a non-angular Intra Prediction Mode (IPM) method.

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured to select an intra prediction mode (IPM) from an IPM list, and use the selected IPM for predicting a block of the picture, wherein the IPM list is generated using both one or more matrix-based IPMs and one or more non-matrix-based IPMs.

Fig. 1

Fig. 2

Fig. 3

EP 4 757 310 A1

Fig. 4

26

Fig. 5

Fig. 6

Selecting an intra prediction mode (IPM) from an IPM list
and using the selected IPM for predicting a block of the
picture, wherein the IPM list is generated using both one
or more matrix-based IPMs and one or more non-matrix-
based IPMs ⎯ S100

Fig. 7

| Create initial list of N conventional intra prediction modes | S102 |

↓

| Extend initial list of N conventional intra prediction modes by M MPDP modes to obtain second list of size P | S104 |

↓

| Sort the second list based on each mode's prediction performance on the target block's template samples | S106 |

↓

| Create a third list of N best performing candidates taken from the sorted second list | S108 |

↓

| Use the intra modes of the third list of N candidates in the block prediction | S110 |

Fig. 8

S120

S122

| convIPM$_0$ | convIPM$_1$ | convIPM$_2$ | ... | convIPM$_N$ |
|---|---|---|---|---|

Add MPDP variants

| convIPM$_0$ | convIPM$_1$ | convIPM$_2$ | ... | convIPM$_N$ | mpdpIPM$_0$ | mpdpIPM$_1$ | mpdpIPM$_2$ | ... | mpdpIPM$_M$ |
|---|---|---|---|---|---|---|---|---|---|

Template-based sorting

...

| mpdpIPM$_5$ | convIPM$_1$ | convIPM$_7$ | ... | convIPM$_2$ | mpdpIPM$_0$ | convIPM$_5$ | convIPM$_{10}$ | ... | convIPM$_N$ |
|---|---|---|---|---|---|---|---|---|---|

Best performance to worst performance

Keep only N best candidates

S124

S126

| mpdpIPM$_5$ | convIPM$_1$ | convIPM$_7$ | ... | convIPM$_2$ |
|---|---|---|---|---|

| mpdpIPM$_0$ | convIPM$_5$ | convIPM$_{10}$ | ... | convIPM$_N$ |
|---|---|---|---|---|

S128

Fig. 9

Fig. 10

Fig. 11(A)

L-shaped neighborhood for MPDP

| Left Template | Current CU |

Samples used for
template cost calculation

Fig. 11(B)

Samples used for
template prediction

Above Template

Samples used for
template cost calculation

Left
Template

Current CU

Samples used for
template cost calculation

Fig. 12

EP 4 757 310 A1

Fig. 13

Decoding from the encoded data stream the
picture

Selecting an intra prediction mode (IPM) from an IPM list
and using the selected IPM for predicting a block of the
picture, wherein the IPM list is generated using both one
or more matrix-based IPMs and one or more non-matrix-
based IPMs

S500

S502

Fig. 14

Receiving an original picture — S600

Encoding the picture into an encoded data stream

Selecting an intra prediction mode (IPM) from an IPM list and
using the selected IPM for predicting a block of the picture,
wherein the IPM list is generated using both one or more matrix-
based IPMs and one or more non-matrix-based IPMs

S602

S604

Including into a data stream an indication indicating that for a prediction of a
block of the picture an IPM list is used which is generated using both one or
more matrix-based IPMs and one or more non-matrix-based IPMs

S608

Fig. 15

Processing Module

Select an intra prediction mode (IPM) from an IPM list
and use the selected IPM for predicting a block of the
picture, wherein the IPM list is generated using both one
or more matrix-based IPMs and one or more non-matrix-
based IPMs

402

404

400

Fig. 16

Decoder module

502

Processing module

504

500

Fig. 17

Encoder module

602

Processing module

604

600

Fig. 18

704

702

encoder

700

600

702

..... [ ][ ][ ][ ][ ][ ][ ][ ] .....

decoder

500

700

Fig. 19

900

901
computing
unit

902
ROM

903
RAM

904

905
I/O interface

906
input unit

907
output unit

908
storage
unit

909
communica-
tion unit

Fig. 20

Europäisches
Patentamt

European
Patent Office

Office européen
des brevets

# EUROPEAN SEARCH REPORT

**Application Number**

EP 24 31 5555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/078550 A1 (DOUYIN VISION BEIJING CO LTD [CN]; BYTEDANCE INC [US]) 18 April 2024 (2024-04-18) * claims 1, 7-12, 14 * ----- | 1-15 | INV. H04N19/11 H04N19/147 H04N19/176 H04N19/593 |
| X | AU 2020 256 658 A1 (BEIJING BYTEDANCE NETWORK TECHNOLOGY CO LTD [CN]; BYTEDANCE INC [US]) 28 October 2021 (2021-10-28) * paragraph [0262] - paragraph [0272] * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 15 May 2025 | Cordara, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 31 5555

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | Publication date | Patent family member(s) | Publication date |
|---|---|---|---|
| WO 2024078550 A1 | 18-04-2024 | NONE | |
| AU 2020256658 A1 | 28-10-2021 | AU 2020256658 A1 | 28-10-2021 |
| | | AU 2020257009 A1 | 28-10-2021 |
| | | BR 112021020026 A2 | 07-12-2021 |
| | | BR 112021020065 A2 | 14-12-2021 |
| | | CA 3135944 A1 | 15-10-2020 |
| | | CA 3135966 A1 | 15-10-2020 |
| | | CN 113661713 A | 16-11-2021 |
| | | CN 113678436 A | 19-11-2021 |
| | | CN 113678439 A | 19-11-2021 |
| | | CN 113678440 A | 19-11-2021 |
| | | CN 113678453 A | 19-11-2021 |
| | | CN 113678459 A | 19-11-2021 |
| | | CN 113785588 A | 10-12-2021 |
| | | CN 117336469 A | 02-01-2024 |
| | | EP 3935833 A1 | 12-01-2022 |
| | | EP 3935836 A1 | 12-01-2022 |
| | | EP 3935838 A1 | 12-01-2022 |
| | | EP 3935854 A1 | 12-01-2022 |
| | | EP 3939314 A1 | 19-01-2022 |
| | | JP 7299341 B2 | 27-06-2023 |
| | | JP 7299342 B2 | 27-06-2023 |
| | | JP 7303325 B2 | 04-07-2023 |
| | | JP 7404387 B2 | 25-12-2023 |
| | | JP 2022526990 A | 27-05-2022 |
| | | JP 2022526991 A | 27-05-2022 |
| | | JP 2022527115 A | 30-05-2022 |
| | | JP 2022527361 A | 01-06-2022 |
| | | JP 2022527362 A | 01-06-2022 |
| | | JP 2023123639 A | 05-09-2023 |
| | | KR 20210145752 A | 02-12-2021 |
| | | KR 20210145754 A | 02-12-2021 |
| | | KR 20210145755 A | 02-12-2021 |
| | | KR 20210150387 A | 10-12-2021 |
| | | KR 20210150391 A | 10-12-2021 |
| | | KR 20250008982 A | 16-01-2025 |
| | | PH 12021552534 A1 | 04-07-2022 |
| | | PH 12021552535 A1 | 04-07-2022 |
| | | SG 11202110936P A | 29-11-2021 |
| | | SG 11202110939T A | 29-11-2021 |
| | | US 2021297661 A1 | 23-09-2021 |
| | | US 2021297671 A1 | 23-09-2021 |
| | | US 2021297672 A1 | 23-09-2021 |
| | | US 2021321090 A1 | 14-10-2021 |
| | | US 2021329248 A1 | 21-10-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 31 5555

This annex lists the patent family members relating to the patent documents cited in  the above-mentioned European search report.
The members are as contained in the European Patent Office EDP file on
The European Patent Office is in no way liable for these particulars which are merely given for the purpose of information.

15-05-2025

| Patent document cited in search report | Publication date | Patent family member(s) | | Publication date |
|---|---|---|---|---|
| | | US | 2022124342 A1 | 21-04-2022 |
| | | US | 2023353744 A1 | 02-11-2023 |
| | | US | 2024064307 A1 | 22-02-2024 |
| | | WO | 2020207491 A1 | 15-10-2020 |
| | | WO | 2020207492 A1 | 15-10-2020 |
| | | WO | 2020207493 A1 | 15-10-2020 |
| | | WO | 2020207497 A1 | 15-10-2020 |
| | | WO | 2020207498 A1 | 15-10-2020 |
| | | WO | 2020207500 A1 | 15-10-2020 |
| | | WO | 2020207502 A1 | 15-10-2020 |
| | | ZA | 202107450 B | 25-10-2023 |
| | | ZA | 202107451 B | 25-10-2023 |

EPO FORM P0459

For more details about this annex : see Official Journal of the European Patent Office, No. 12/82

page 2 of 2